# EUROPÄISCHE PATENTSCHRIFT

(11) **EP 0 950 506 B1**
(45) Veröffentlichungstag und Bekanntmachung des Hinweises auf die Patenterteilung: **15.10.2003**
(21) Anmeldenummer: 99107099.6
(22) Anmeldetag: 12.04.1999
(51) Int. Cl.: B29D 30/60

(54) **Verfahren zur Herstellung eines Fahrzeugluftreifens**
Process for the manufacture of a vehicle tyre
Procédé pour la fabrication d'un pneu pour véhicule

(30) Priorität: 16.04.1998 DE 19816849
(43) Veröffentlichungstag der Anmeldung: 20.10.1999
(73) Patentinhaber: Continental Aktiengesellschaft, 30165 Hannover (DE)
(72) Erfinder: Sergel, Horst, 30657 Hannover (DE); Huinink, Heinrich, 30823 Garbsen (DE); Holzbach, Wolfgang, Dr., 30827 Garbsen (DE)

(56) Entgegenhaltungen:
- EP-A- 0 747 243
- EP-A- 0 875 366
- EP-A- 0 875 367
- DE-A- 19 507 486
- US-A- 3 223 572
- US-A- 4 147 577
- PATENT ABSTRACTS OF JAPAN vol. 1998, no. 12, 31. Oktober 1998 (1998-10-31) & JP 10 193475 A (YOKOHAMA RUBBER CO LTD:THE), 28. Juli 1998 (1998-07-28)

## Beschreibung

Die Erfindung betrifft ein Verfahren zur Herstellung eines Fahrzeugluftreifens, bei dem zum Erzeugen und Aufbringen eines vorzugsweise unvulkanisierten Laufstreifens auf einen Teilreifen, der bereits eine bombierte Karkasse sowie radial außen davon ein Gürtelpaket aufweist, zumindest zwei Materialstreifen aus je einer Mischung aus Kautschuk und/oder Kunststoff auf den Teilreifen aufgebracht werden, wobei zumindest ein Materialstreifen in zahlreichen im wesentlichen aneinander liegenden in Reifenumfangsrichtung verlaufenden Windungen gewickelt wird, wobei im Fall von zwei Materialstreifen diese aus unterschiedlichen Mischungen bestehen und je nach den gewünschten Eigenschaften des Reifens gleichzeitig oder nacheinander an unterschiedlichen Bereichen im Inneren oder in der radial äußeren Zone des vom fertigen Laufstreifens eingenommenen Raumes angeordnet werden.

Ein solches Verfahren ist z. B. aus der US 3,223,572 für die Runderneuerung von Fahrzeugluftreifen bekannt. Ferner sind Verfahren zur Herstellung eines Fahrzeugluftreifens, bei dem ein Kautschukmaterialstreifen in zahlreichen im wesentlichen aneinanderliegenden Windungen um einen Teilreifen gewickelt wird, auch aus anderem Stand der Technik (z. B. R.A. Cronin: Elastomerics, August 1987, Seiten 24-27, US 4,147,577) bekannt. Die Vorteile dieses Verfahrens liegen insbesondere darin, daß nur kleine Extruder für die Laufstreifenmischungen bereitgestellt werden müssen und der gewickelte Laufstreifen einfach an die gewünschte Dimension angepaßt werden kann, ohne daß eine sehr große Anzahl an Extrudermundstücken für die Laufstreifenextrusion bereit gehalten werden muß.
In der US 3,223,572 wird auch vorgeschlagen, daß im mittleren Bereich des Laufstreifens eine Wintermischung und in den Randbereichen eine herkömmliche Kautschukmischung aufgewickelt wird. In der US 4,147,577 wird beschrieben, daß für den gewickelten Laufstreifen drei verschiedene Kautschukmischungen verwendet werden können.

An den Laufstreifen eines Fahrzeugluftreifens werden unterschiedliche Anforderungen gestellt. So muß der Teil des Laufstreifens, der unmittelbaren Kontakt mit der Fahrbahn hat, z. B. eine optimale Haftung zu dieser aufweisen. Gleichzeitig sollen Abrieb, Rollwiderstand und eine ausreichende Ableitfähigkeit gewährleistet werden. Bisher wird für diesen Teil des Laufstreifens, der mit der Fahrbahn in Kontakt tritt, eine einzige Gummimischung verwendet. Diese Gummimischung muß nahezu alle Anforderungen erfüllen. Dabei ist es nachteilig, daß jede Eigenschaft der Mischung die mit der Fahrbahn in Berührung kommt, nur in bestimmten Grenzen variiert werden kann, um andere Charakteristika nicht negativ zu beeinflussen.

Aus der EP 0 747 243 A1 ist ein Fahrzeugluftreifen bekannt, bei dem zur Gewährleistung einer elektrischen Ladungsableitung auf den extrudierten Laufstreifen ein dünner leitfähiger Mischungsstreifen aufgelegt wird, der nach der Vulkanisation die Wände und den Grund einer Profilrille bildet und mit einer anderen leitfähigen Mischung in Kontakt steht.

Um die Eigenschaften des Fahrzeugluftreifens weiterhin zu optimieren, ist es bekannt, den Laufstreifen in radialer Richtung aus zwei Teilen verschiedener Mischungszusammensetzung aufzubauen, wobei der Laufstreifenteil, der mit der Fahrbahn in Berührung kommt (Cap), die bereits genannten Eigenschaften vorrangig hinsichtlich Abrieb, Haftung und Rollwiderstand aufweisen soll. Gleichzeitig soll die Base-Gummimischung, die sich unmittelbar unterhalb der Cap-Gummimischung befindet, in der Art optimiert sein, daß z. B. der Rollwiderstand positiv beeinflußt wird.

Die Herstellung solcher unvulkanisierter Reifenlaufstreifen erfolgt im allgemeinen über einen Extruder dessen Mundstück die Formgebung des Laufstreifenrohlings bestimmt. Dabei ist es aber nicht möglich, einfach und unkompliziert z. B. verschiedene Zonen der mit der Fahrbahn in Berührung kommenden Fläche des Laufstreifens (z. B. Schulterbereich und Mittelteil) mit Mischungen unterschiedlicher Zusammensetzung zu versehen, um z. B. die Traktion des Reifens weiter zu verbessern. Es wären nämlich komplizierte Extrudermundstücke erforderlich, um den Laufstreifenrohling in entsprechend verschiedene Zonen mit unterschiedlichen Mischungen zu unterteilen. Weiterhin besteht beim herkömmlichen Reifenaufbauverfahren, bei dem der Laufstreifenrohling als ganzes Bauteil aufgelegt wird, das Problem, daß die beiden Enden des Laufsreifenrohlings beim Aneineinderfügen eine Stoßstelle (Splice) bilden. Dieser Stoß muß extra vorbehandelt werden (Einstreichen mit Benzinlösung), um eine ausreichende Haftung der beiden Enden zu gewährleisten.

Der vorliegenden Anmeldung liegt die Aufgabe zugrunde, einen Fahrzeugluftreifen bereitzustellen, dessen Laufstreifen im Fahrbetrieb hervorragende Eigenschaften aufweist und gleichzeitig einfach und unkompliziert hergestellt werden kann.

Gelöst wird diese Aufgabe erfindungsgemäß dadurch, daß der radial innenliegende Teil des Laufstreifens, die sogenannte Base, und Teile, die die mit der Fahrbahn in Berührung kommende Fläche des Laufstreifens bilden, aus einem Materialstreifen aus einer rußgefüllten Base-Mischung gebildet werden und daß die restlichen Bereiche zwischen Base und der mit der Fahrbahn in Berührung kommenden Fläche durch Aufwickeln eines zweiten Materialstreifens aus einer Cap-Mischung oder durch Einlegen eines dicken Einzelstreifens ausgefüllt werden.

Erfindungsgemäß konnte das Verfahren des Aufwickelns eines Materialstreifens zur Bildung eines Laufstreifens in der Art abgewandelt werden, daß die Gesamtheit der Reifeneigenschaften optimiert werden konnte. Für die Herstellung eines solchen Fahrzeugluftreifens werden zwei oder mehrere im wesentlichen flache Materialstreifen (bevorzugtes Verhältnis zwischen Breite zur Dicke > 7 : 1) aus Kautschuk und/oder Kunststoff verwendet. Prinzipiell ist es dabei auch möglich, mehrere Materialstreifen in Längsrichtung aneinanderzusetzen. Der einzelne Materialstreifen besteht aus einer einzigen Mischung aus Kautschuk und/oder Kunststoff und wird an die entsprechenden Zonen im Reifen angeordnet. Die Mischung aus Kautschuk und/oder Kunststoff enthält außer den entsprechenden Polymeren (z. B. SBR, BR, NR) weiterhin übliche Füll- (z. B. Ruß, Kieselsäure) und Zusatzstoffe (z. B. Schwefel, Beschleuniger, Verarbeitungshilfsmittel).

Erfindungsgemäß entsteht beim Aufwickeln der Materialstreifen kein Splice wie beim herkömmlichen Reifenaufbauprozeß. Da der oder die Materialstreifen warm aufgewickelt werden und demnach eine ausreichende Klebrigkeit besitzen, kann auf die Verwendung von benzinhaltigen Haftverbesserern verzichtet werden.

Der radial innenliegende Teil des Laufstreifens (Base) und der Teil zwischen Base und der mit der Fahrbahn in Berührung kommenden Fläche (Cap) kann durch Aufwickeln von zumindest zwei verschiedenen Materialstreifen erzeugt werden. Dabei ist es möglich, daß zuerst der Materialstreifen vollständig aufgewickelt wird, der die Baseschicht des Laufstreifens bildet. Nach Aufbringung der Baseschicht erfolgt das Aufwickeln des nächsten Materialstreifens, der die Cap bildet. Besonders bevorzugt ist aber, wenn gleichzeitig Cap und Base aufgewickelt werden. So ist es möglich, daß z. B. ausgehend von einer axialen Begrenzung des Reifenrohlings zuerst der Materialstreifen der Base durch Wickeln aufgebracht wird und versetzt dazu (versetzt z. B. eine Windung) auf den aufgewickelten Materialstreifen der Base-Mischung z. B. ein Materialstreifen der Cap-Mischung aufgebracht wird. Durch eine solche Vorgehensweise wird besonders zeitgünstig der Reifenlaufstreifenrohling komplettiert. Bei einem herkömmlichen Cap- und Baseaufbau waren hierzu große Extruderanlagen mit komplizierten Mundstücken erforderlich, um einen solchen Fahrzeugluftreifen bereitzustellen. Auch wird es erfindungsgemäß möglich, einen schnellen und unkomplizierten Wechsel von verschiedenen Mischungen vorzunehmen, um dadurch eine optimale Anpassung der Produktion z. B. von Sommer- oder Winterreifen zu gewährleisten.

Der radial innenliegende Teil des Laufstreifens (Base) und Teile, die die mit der Fahrbahn in Berührung kommende Fläche des Laufstreifens bilden, werden aus einem Materialstreifen aus einer rußgefüllten Basemischung gebildet und die restlichen Bereiche zwischen Base und der mit der Fahrbahn in Berührung kommenden Fläche werden durch Aufwickeln eines zweiten Materialstreifens aus einer Capmischung oder durch Einlegen eines dicken Einzelstreifens ausgefüllt. Die Dicke der Zone, die durch den Materialstreifen der Basemischung eingenommen wird (in radialer Richtung) beträgt an einigen Zonen des Reifens abhängig von der Reifendimension 2 - 5 mm und an anderen Zonen entspricht die Dicke die der gesamten Laufstreifendicke. Die Zonen, die noch nicht die Dicke eines vollständigen Laufstreifens aufweisen, werden durch Aufwickeln eines zweiten Materialstreifens oder durch Einlegen eines dicken Einzelstreifens ausgefüllt. Das Aufwickeln eines zweiten Materialstreifens, der eine Capmischung aufweist, kann vorzugsweise während des Aufwickelns, z. B. mit unterschiedlicher Vorschubgeschwindigkeit, des Basematerialstreifens erfolgen. Die Mischung des zweiten Materialstreifens bzw. des Einzelstreifens weist vorzugsweise als Füllstoff Kieselsäure auf. Der Vorteil einer solchen Kombination liegt darin, daß kieselsäurehaltige Laufflächenmischungen dem Reifen einen geringen Rollwiderstand und gute Naßrutscheigenschaften verleihen, jedoch aufgrund ihrer niedrigen elektrischen Leitfähigkeit dem Laufstreifen eine geringe Ableitfähigkeit verleihen. Durch die erfindungsgemäße Kombination von rußund kieselsäurehaltiger Mischung in der mit der Fahrbahn in Berührung kommenden Fläche des Laufstreifens wird durch den rußhaltigen Materialstreifen, der mit wiederum weiteren leitenden Schichten des Reifens (z. B. Gürtelgummierung) in Kontakt steht, die Ableitung von elektrostatischer Ladung gewährleistet. Es ist dabei anzustreben, daß die Aufwicklung des rußhaltigen Materialstreifens in der Art erfolgt, daß sich dieser umlaufend in der mit der Fahrbahn in Berührung kommenden Fläche befindet. Prinzipiell ist es aber auch möglich, durch einen geeigneten Aufwickelvorschub bzw. einer größeren Anzahl an verwendeten Materialstreifen mit entsprechenden Mischungen die rußhaltige Mischungsschicht der Basemischung tropfenförmig in die mit der Fahrbahn in Berührung kommenden Fläche einzubringen, so daß kein umlaufendes leitfähiges Band entsteht. Die dadurch entstehenden "Lücken" werden dann mit dem Materialstreifen der Cap-Gummimischung ausgefüllt. Prinzipiell ist es aber auch möglich, daß zwei rußhaltige Kautschukmischungen den Materialstreifen der Cap- und der Basemischung bilden. Wie bereits erwähnt, ist es auch hier vorteilhaft, wenn die Materialstreifen im wesentlichen zeitgleich aufgebracht werden, da dadurch eine schnellere Herstellung des Fahrzeugluftreifens ermöglicht wird. Vorteilhafterweise können zumindest zwei Materialstreifen unterschiedlicher Mischungen in der Art auf den Teilreifen gewickelt werden, daß im fertigen Reifen die mit der Fahrbahn in Berührung kommende Fläche alternierende Bereiche aufweist, die durch die jeweils einzelnen Mischungen der Materialstreifen gebildet werden. Dadurch wird es z. B. möglich, daß im fertigen Reifen erhabene Bereiche des Profils (Rippen, Klötze) eine ganz bestimmte Mischungszusammensetzung aufweisen, wobei die Rillen bzw. Profilklotzkanten eine andere Zusammensetzung besitzen. Dadurch wird es möglich, die Mischungszusammensetzung des Reifens an die Fahrbahnverhältnisse besser anzupassen.

Besonders vorteilhaft ist, wenn im fertigen Reifen zumindest die beiden radial äußeren Schulterbereiche des Laufstreifens (z. B. Cap- und Baseteil oder nur Capteil) aus je einem Materialstreifen einer Wintermischung gebildet werden. Damit wird die Traktion, insbesondere bei Kurvenfahrten, des Reifens optimiert, so daß eine Anpassung an die Straßenverhältnisse besser erfolgen kann. Der Schulterbereich ist der Randbereich des Reifens, der maximal 15 % der mit der Fahrbahn in Berührung kommenden Axialerstreckung des Laufstreifens bezogen auf den Neureifen einnimmt. Dabei ist wiederum bevorzugt, wenn die gesamte radial äußere Zone des Laufstreifens, die mit der Fahrbahn in Berührung kommt, aus einem Materialstreifen gebildet wird, der im vulkanisierten Zustand dem Reifen gute Winterfahreigenschaften verleiht.

Besonders bevorzugt ist, wenn die Bereiche, die mit der Fahrbahn in Berührung kommende Fläche des Laufstreifens bilden, in die während der Vulkanisation Profileinschnitte (Feineinschnitte oder Rillen) eingebracht werden, aus einem Materialstreifen gebildet werden, der im vulkanisierten Zustand eine höhere elektrische Leitfähigkeit aufweist und daß die Mischung dieses Materialstreifens bei der Ausbildung der Profileinschnitte mit einer anderen Mischung, die ebenfalls eine hohe elektrische Leitfähigkeit besitzt, in Kontakt gebracht wird. Bei der Einbringung von Profileinschnitten werden während der Vulkanisation erhabene Bereiche der Vulkanisationsform (Lamellenbleche und Stege) in den Rohling gepreßt. Da z. B. das Lemellenblech die Mischung nicht schneidet, sondern verdrängt, wird die Mischung, die sich an der Oberfläche befindet, mit dem Lamellenblech nach radial innen mitgerissen und kann somit mit einer leitfähigen Mischung, die sich radial im Innern des Reifens befindet (z. B. Base-Mischung oder Gürtelgummierung), in Kontakt gebracht werden. Die Ableitung von elektrostatischen Ladungen kann somit zur Fahrbahnoberfläche über eine leitfähige Mischung aus vernetzten Kautschuk und/oder Kunststoff erfolgen. Diese Mischung befindet sich im wesentlichen nur im Bereich der Lamellenkanten bzw. Profilklotzkanten, jedoch in Kontakt mit der Fahrbahn in Berührung kommenden Fläche. Vorzugsweise enthält dieser Materialstreifen, der auf die Oberfläche des Laufstreifens aufgelegt wird, und zwar in Bereichen, in denen Profilrillen bzw. Feineinschnitte eingebracht werden, als Füllstoff Ruß, so daß dieser eine ausreichende Leitfähigkeit besitzt. Die restliche mit der Fahrbahn in Berührung kommende Fläche enthält als Füllstoff vorzugsweise Kieselsäure, da dadurch die bereits erwähnten positiven Eigenschaften, wie verringerten Rollwiderstand und gutes Naßrutschverhalten, positiv beeinflußt werden. Vorteilhafterweise wird der im vulkanisierten Zustand leitfähige Materialstreifen ebenfalls aufgewickelt.

Das erfindungsgemäße Verfahren kann zur Herstellung von runderneuerten Reifen, aber auch von Neureifen, verwendet werden. Besonders bevorzugt ist die Verwendung des erfindungsgemäßen Verfahrens, bei dem ein Teilreifen im Verfahrensschritt A so weit konfektioniert wird, daß die luftundurchlässige Innenschicht eine oder mehrere Lagen der Karkasse, ggf. die Wulstkerne bzw. weitere den Wulstbereich verstärkende Lagen, eine oder mehrere Gürtellagen und ggf. eine ein- oder mehrteilige Bandage den Teilreifen bilden. Anmeldungsgemäß sollen die Gürtellagen und ggf. die Bandage und/oder ggf. weitere verstärkende Schichten radial oberhalb der Karkasse unter den Begriff "Gürtelverstärkung" gefaßt werden. Weiterhin ist es möglich, daß auf den Teilreifen als radial äußerste Lage Teile des Laufsreifens z. B. eine Laufstreifenunterplatte und/oder eine Laufstreifenbasislage aufgebracht wird. Dieser Teilreifen A wird im wesentlichen ausvulkanisiert. Der Vulkanisationsprozeß wird vorzugsweise in einer Vulkanisationsform vorgenommen, die es ermöglicht, sowohl die Oberfläche als auch dem bzw. den Festigkeitsträgern eine vorbestimmte Querschnittskontur zu vermitteln. Dadurch wird ein Teilreifen erzielt, der einfach und unkompliziert durch den anschließenden Verfahrensschritt B komplettiert werden kann. Das läßt eine Einflußnahme auf die erzielbare Gleichförmigkeit (Tire Uniformity) zu. Der im wesentlichen ausvulkanisierte Teilreifen ist über einen längeren Zeitraum lagerbar, so daß die Entscheidung, in welcher Weise der Reifen komplettiert werden soll (z. B. bezüglich der Laufstreifenmischung oder des Laufstreifenprofils), auf einen späteren Zeitpunkt verschoben werden kann. Der Reifenhersteller wird somit in die Lage versetzt, den Marktanforderungen entsprechend und prompt zu reagieren. Der Vorteil dieses Verfahrens liegt darin, daß durch eine im wesentlichen Ausvulkanisation des Teilreifens ohne Profillaufstreifen z. B. die Laufstreifenunterplatte bzw. die Laufstreifenbasislage bei der Vulkanisation an der glatten Innenwand der Heizform anliegt, so daß durch den Innendruck in der Form keine Verschiebungen in der Gewebestruktur des Gürtelverbandes hervorgerufen werden können, wie dies aus der gemeinsamen Vulkanisation von Gürtellagen und Laufstreifen, bei dem die Profilklötze durch den Innendruck in die Form gepreßt werden müssen, gelegentlich beobachtet wird.

Die Verfahrensschritte A und B können auch in der Art aufgeteilt sein, daß der Teilreifen im Verfahrensschritt A durch Konfektionierung einer luftundurchlässigen Innenschicht, einer Festigkeitsträger enthaltenen Karkasse ggf. Wulstkerne und ggf. den Wulstbereich verstärkende Kautschukschichten und zumindest einer Gürtellage konfektioniert wird und nach der Ausvulkanisation dieses Teilreifens im Verfahrensschritt B der Teilreifen durch Hinzufügen der unvulkanisierten ein- oder mehrteiligen Bandage und des kompletten Laufstreifens zu einem Komplettreifen aufgebaut wird. Die Aufbringung einer ein- oder mehrteiligen Bandage, die auch in Kautschuk gebettete im allgemeinen textile Festigkeitsträger, z.B. Nylon, besteht, und des Laufstreifens im Verfahrensschritt B hat den Vorteil, daß im fertigen Reifen in der Bandage eine gleichmäßige Längsspannungsverteilung über die Reifenbreite erzielt wird, wird nun in die Reifenkontur durch spannungsunterschiedliches Aufbringen beeinflußt, indem dem Teilreifen eine Kontur vermittelt wird, die von der im Verfahrensschritt B vermittelten Kontur abweicht, lassen sich gezielt bestimmte Reifeneigenschaften, wie etwa Abrieb oder Hochgeschwindigkeitstauglichkeit optimieren.

Ein Verfahren zur Herstellung eines Reifens, daß in die Verfahrensschritte A und B geteilt ist, ist z. B. aus der DE 195 07 486 A1 bekannt.

Anhand einer Zeichnung soll ein Ausführungsbeispiel näher erläutert werden. Es zeigen schematisch:
- Fig. 1: den Aufbau einer Vorrichtung für die Durchführung des erfindungsgemäßen Verfahrens
- Fig. 2: den Querschnitt eines Fahrzeugluftreifens

- Fig.3a: den Querschnitt eines unvulkanisierten Laufstreifens und
- Fig.3b: den Querschnitt des vulkanisierten Laufstreifens aus Fig. 3a.

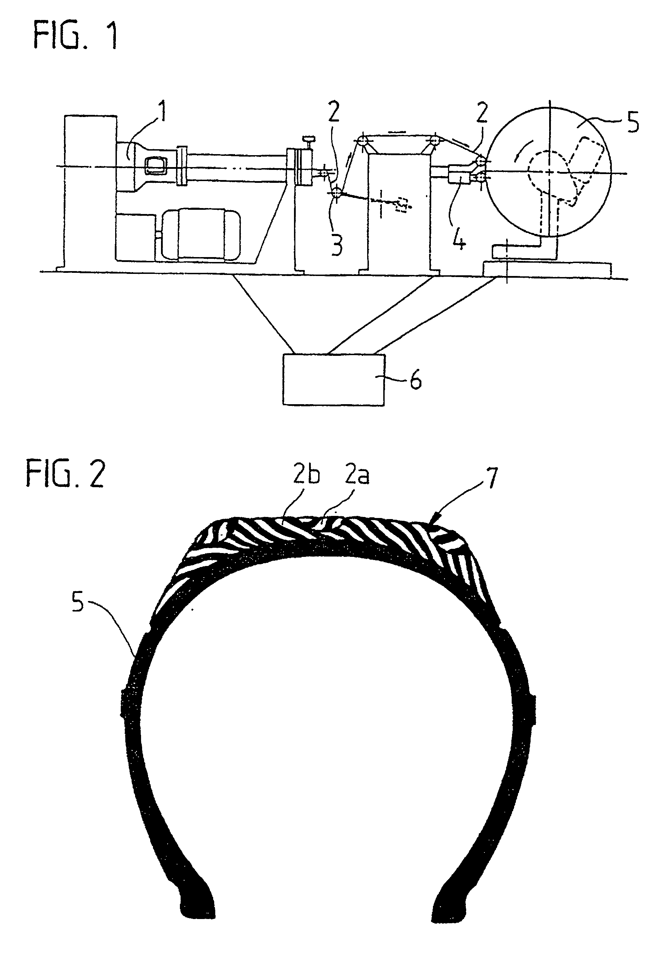

Die Figur 1 zeigt einen Extruder 1, aus dem ein Materialstreifen 2 gefördert wird, der aufgrund des Extruder-Mundstückes einen runden Querschnitt aufweist. Dieser Rundschnurmaterialstreifen 2 besteht aus einer Kautschukmischung. Über Umlenkrollen 3 und ein nicht näher dargestelltes Walzwerk wird der extrudierte Rundschnurmaterialstreifen (Durchmesser ca. 1 cm) in eine flache Rechteckquerschnittsform (ca. 16 x 2 mm) überführt. Über einen Auflagekopf 4 wird der Teilreifen 5, der frei drehbar gelagert ist, angetrieben. Über eine Computersteuerung 6 wird ausgehend von der Extrusion des Materialstreifens 2 über den beweglichen Auflagekopf 4 der flach gewalzte Materialstreifen mit seiner breiten Seite auf den Teilreifen 5 gespult. Das Aufspulen des Materialstreifens erfolgt in der Art, daß ein bis zwei Windungen des Materialstreifens 2 auf die Seitenwand des Teilreifens 5 gespult werden und daran anschließend der Reifenlaufstreifen von einer axialen Begrenzung in Reifenumfangsrichtung zu seiner anderen axialen Begrenzung aufgewickelt wird. Über die Computersteuerung 6 wird festgelegt, in welchem Maße die Materialstreifenwindungen überlappen. Dabei ist es aber auch möglich, daß die Materialstreifenwindungen nur auf Stoß in Reifenumfangsrichtung aneinandergrenzen. Der Auflagekopf 4 wird so gesteuert, daß dieser pro Umdrehung des Teilreifens 5 insgesamt 1 - 15 mm in Axialrichtung des Reifens verschoben wird. Durch ein geeignetes Steuersystem 6 ist es möglich, die Laufstreifendicke zu beeinflussen bzw. den Auflagekopf 4 mehrere Male von einer axialen Seite zur anderen den Materialstreifen aufwickeln zu lassen. Durch einen nicht näher beschriebenen Anrollvorgang wird der Materialstreifen 2 auf den Teilreifen 5 gedrückt. Es ist auch möglich, zwei Materialstreifen ausgehend von der jeweiligen axialen Begrenzung des Teilreifens 5 auf diesen aufzuwickeln. Dabei können diese Materialstreifen gleiche oder verschiedene Zusammensetzungen aufweisen. Besonders vorteilhaft ist, wenn diese beiden Materialstreifen im wesentlichen zeitgleich auf den Teilreifen 5 aufgebracht werden.

Die Figur 2 verdeutlicht einen Querschnitt eines durch das erfindungsgemäße Verfahren hergestellten Fahrzeugluftreifens. Der Laufstreifen 7 wurde auf den Teilreifen 5 in der Art aufgebracht, daß ein rußenthaltender Materialstreifen 2b zuerst auf den Teilreifen 5 aufgewickelt wurde. Dabei wurde der Aufwickelvorgang so gesteuert, daß der Materialstreifen 2b teilweise die gesamte Dicke des Laufstreifens 7 erreicht, so daß die radial äußere Begrenzung des Laufstreifens 7 teilweise eine Rußmischungsschicht aufweist. Ein weiterer Materialstreifen 2a, der als Füllstoff z.B. Kieselsäure enthält, wird zur Fertigstellung der gesamten Laufstreifendicke in die entsprechenden Lücken, die bei dem Aufwickelvorgang des Materialstreifens 2b gelassen wurden, ausgefüllt. Vorzugsweise bilden die Materialstreifen 2a den Schulterbereich des Laufstreifens, um damit z. B. ein gutes Naßrutschverhalten des Reifens bei Kurvenfahrten zu gewährleisten. Diese Eigenschaft kann weiter dahingehend optimiert werden, daß der Materialstreifen 2b nur einen geringen Anteil an der mit der Fahrbahn in Berührung kommenden Fläche bildet. Dadurch wird eine ausreichende Ableitfähigkeit von elektrostatischen Ladungen gewährleistet und gleichzeitig sichergestellt, daß der Fahrzeugluftreifen im wesentlichen die Laufstreifeneigenschaften aufweist, die durch den Materialstreifen 2a bestimmt werden. Wenn der Materialstreifen 2a also Kieselsäure als Füllstoff enthält, werden dadurch das Naßrutschverhalten und der Rollwiderstand optimal beeinflußt.

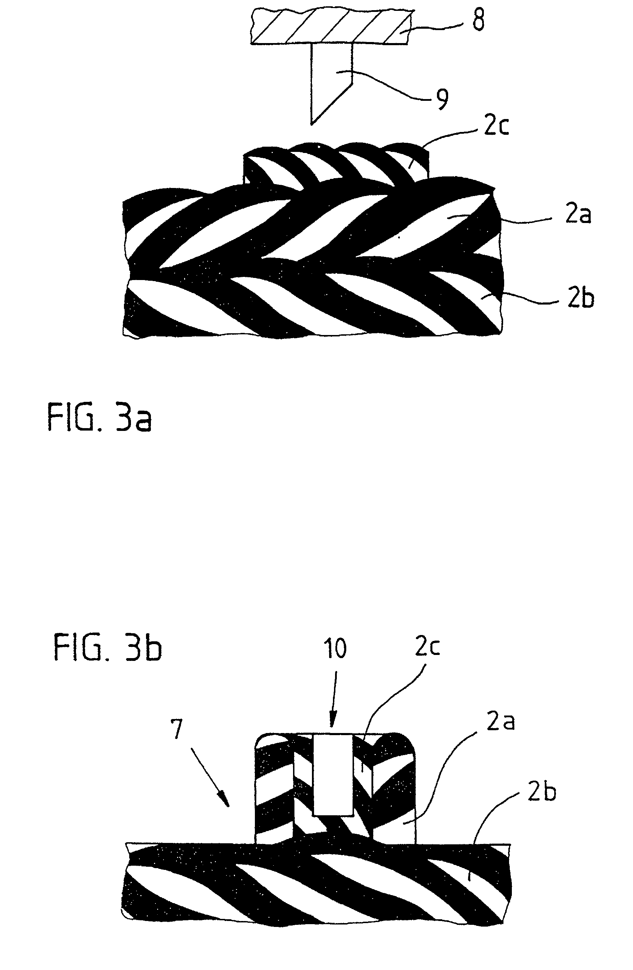

Die Figur 3a zeigt einen Querschnitt eines unvulkanisierten Laufstreifens, wobei dieser aus den Materialstreifen 2a, 2b und 2c gebildet ist. Die Kautschukmischungen der Materialstreifen 2b und 2c sind rußenthaltende Kautschukmischungen, so daß sie eine hohe elektrische Leitfähigkeit im unvulkanisierten Zustand aufweisen. Besonders vorteilhaft ist, wenn die Mischungen der Materialstreifen 2b und 2c die gleiche Zusammensetzung aufweisen, um die Bereitstellung zusätzlicher Mischungen zu umgehen. Der Materialstreifen 2b wird zuerst auf den Teilreifen gewickelt und zeitlich unwesentlich versetzt sofort der Materialstreifen 2a. Nach Fertigstellung des Aufwickelns der Kautschukmischungen der Materialstreifen 2a und 2b wird ein weiterer Materialstreifen 2c auf die aufgewickelte Schicht aus dem Materialstreifen 2a aufgebracht. Durch entsprechende Steuerung wird der Materialstreifen 2c in dem Bereich aufgebracht, wo nach der Vulkanisation (Figur 3b) ein Feineinschnitt 10 (Lamelle) eingebracht ist. Die Einbringung eines Feineinschnittes erfolgt während der Vulkanisation in einer nicht näher dargestellten Vulkanisationsform 8, die eine entsprechende Formung für Profilklötze bzw. Rillen aufweist. In den abgesenkten Teilen der Vulkanisationsform, die zur Bildung von erhabenen Profilklötzen im Reifen dienen, befinden sich Lamellenbleche 9, durch die Feineinschnitte eingebracht werden sollen. Da das Lamellenblech 9 die Kautschukmischungen nicht durchschneidet, sondern verdrängt, wird im vulkanisierten Zustand eine Lamelle 10 im nicht bezeichneten Profilklotz erzeugt, deren Kanten die Mischungszusammensetzung des Materialstreifens 2c aufweisen.

Durch den Vulkanisationsvorgang wird die leitfähige Mischung des Materialstreifens 2c verdrängt und es entsteht eine leitfähige Verbindung von der mit der Fahrbahn in Berührung kommenden Fläche bis hin zu einer weiteren leitfähigen Schicht aus dem Materialstreifen 2b. Es ist aber auch möglich, den Materialstreifen 2c dort aufzubringen, wo im fertigen Profildesign sich eine Profilrille befindet, so daß über die Profilklotzkanten, ausgehend von der Schicht aus dem Materalstreifen 2b bis hin zur mit der Fahrbahn in Berührung kommenden Fläche, die Mischungszusammensetzung des Materialstreifens 2c den leitfähigen Kontakt herstellt.

Mit diesem erfindungsgemäßen Verfahren werden Fahrzeugluftreifen erzeugt, die optimale Fahreigenschaften aufweisen und gleichzeitig das Problem einer schlechten Ableitfähigkeit lösen können. Weiterhin ist es möglich, durch geschickte Kombination der einzelnen Materialstreifen ein optimales Fahrverhalten des Reifens zu ermöglichen. Diese Fahrzeugluftreifen können verfahrenstechnisch unkompliziert und kostengünstig hergestellt werden, sowohl als neue Reifen als auch als runderneuerte Reifen.

## Patentansprüche

1. Verfahren zur Herstellung eines Fahrzeugluftreifens, bei dem zum Erzeugen und Aufbringen eines vorzugsweise unvulkanisierten Laufstreifens (7) auf einen Teilreifen (5), der bereits eine bombierte Karkasse sowie radial außen davon ein Gürtelpaket aufweist, zumindest zwei Materialstreifen (2a, 2b, 2c) aus je einer Mischung aus Kautschuk und/oder Kunststoff auf den Teilreifen (5) aufgebracht werden, wobei zumindest ein Materialstreifen (2a, 2b, 2c) in zahlreichen im wesentlichen aneinander liegenden in Reifenumfangsrichtung verlaufenden Windungen gewickelt wird, wobei im Fall von zwei Materialstreifen (2a, 2b) diese aus unterschiedlichen Mischungen bestehen und je nach den gewünschten Eigenschaften des Reifens gleichzeitig oder nacheinander an unterschiedlichen Bereichen im Inneren oder in der radial äußeren Zone des vom fertigen Laufstreifens (7) eingenommenen Raumes angeordnet werden,
**dadurch gekennzeichnet, daß** der radial innenliegende Teil des Laufstreifens (7), die sogenannte Base, und Teile, die die mit der Fahrbahn in Berührung kommende Fläche des Laufstreifens (7) bilden, aus einem Materialstreifen (2b) aus einer rußgefüllten Base-Mischung gebildet werden und **daß** die restlichen Bereiche zwischen Base und der mit der Fahrbahn in Berührung kommenden Fläche durch Aufwickeln eines zweiten Materialstreifens (2a) aus einer Cap-Mischung oder durch Einlegen eines dicken Einzelstreifens ausgefüllt werden.

2. Verfahren nach Anspruch 1, **dadurch gekennzeichnet, daß** der zweite Materialstreifen (2a) im wesentlichen zeitgleich mit dem ersten Materialstreifen (2b) aufgebracht wird.

3. Verfahren zur Herstellung eines Fahrzeugluftreifens nach zumindest einem der vorhergehenden Ansprüche, **dadurch gekennzeichnet, daß** zumindest zwei Materialstreifen (2a, 2b, 2c) unterschiedlicher Mischungen auf den Teilreifen (5) gewickelt werden, so daß im fertigen Reifen die mit der Fahrbahn in Berührung kommende Fläche alternierende Bereiche aufweist, die durch die jeweils einzelnen Mischungen der Materialstreifen (2a, 2b, 2c) gebildet werden.

4. Verfahren zur Herstellung eines Fahrzeugluftreifens nach zumindest einem der vorhergehenden Ansprüche, **dadurch gekennzeichnet, daß** im fertigen Reifen zumindest die beiden radial äußeren Schulterbereiche des Laufstreifens (7) aus je einem Materialstreifen (2a) einer Wintermischung gebildet werden.

5. Verfahren zur Herstellung eines Fahrzeugluftreifens nach Anspruch 4, **dadurch gekennzeichnet, daß** im fertigen Reifen zumindest die radial äußere Zone des Laufstreifens (7) aus einem Materialstreifen (2a) einer Wintermischung gebildet wird.

6. Verfahren zur Herstellung eines Fahrzeugluftreifens nach zumindest einem der vorhergehenden Ansprüche, **dadurch gekennzeichnet, daß** der Materialstreifen (2a), der zumindest teilweise die mit der Fahrbahn in Berührung kommenden Fläche des Laufstreifens (7) bildet, aus einer mit Kieselsäure gefüllten Mischung besteht.

7. Verfahren zur Herstellung eines Fahrzeugluftreifens nach zumindest einem der vorhergehenden Ansprüche, bei dem der Laufstreifen (7) aus zumindest zwei Materialstreifen (2a, 2b, 2c) gebildet wird, die eine unterschiedliche elektrische Leitfähigkeit aufweisen, **dadurch gekennzeichnet, daß** im fertigen Reifen zumindest die Bereiche der mit der Fahrbahn in Berührung kommenden Fläche des Laufstreifens (7), in die während der Vulkanisation Feineinschnitte (10) oder Rillen eingebracht werden, aus einem Materialstreifen (2c) gebildet werden, der im vulkanisierten Zustand eine höhere elektrische Leitfähigkeit aufweist, und **daß** die Mischung dieses Materialstreifens (2c) bei der Ausbildung der Profileinschnitte mit einer anderen Mischung, die ebenfalls eine hohe elektrische Leitfähigkeit besitzt, in Kontakt gebracht wird.

8. Verfahren zur Herstellung eines Fahrzeugluftreifens nach Anspruch 7, **dadurch gekennzeichnet, daß** ein dünner Materialstreifen (2c) aus einer Mischung, die im vulkanisierten Zustand eine hohe elektrische Leitfähigkeit aufweist, aufgewickelt wird.

9. Verfahren zur Herstellung eines Fahrzeugluftreifens nach zumindest einem der vorhergehenden Ansprüche, **dadurch gekennzeichnet, daß** der Teilreifen (5) unvulkanisiert oder im wesentlichen ausvulkanisiert ist.

## Claims

1. Method of producing a pneumatic vehicle tyre, wherein, to produce and apply a preferably unvulcanised tread strip (7) to a partial tyre (5), which already has an end-closed carcase and a belt bundle radially externally thereof, at least two material strips (2a, 2b, 2c), each formed from a mixture of rubber and/or plastics material, are applied to the partial tyre (5), at least one material strip (2a, 2b, 2c) being wound in numerous windings, which lie substantially adjacent one another and extend in the circumferential direction of the tyre, said windings being formed from different mixtures in the case of two material strips (2a, 2b) and being disposed simultaneously or successively on different regions in the interior or in the radially external zone of the area occupied by the finished tread strip (7), depending on the desired properties of the tyre, **characterised in that** the radially internally situated portion of the tread strip (7), the so-called base, and parts, which form the surface of the tread strip (7) coming into contact with the roadway, are formed from a material strip (2b) formed from a base mixture filled with carbon black, and **in that** the remaining regions between the base and the surface coming into contact with the roadway are filled by winding-on a second material strip (2a) formed from a cap mixture or by inserting a thick individual strip.

2. Method according to claim 1, **characterised in that** the second material strip (2a) is substantially applied simultaneously with the first material strip (2b).

3. Method of producing a pneumatic vehicle tyre according to at least one of the preceding claims, **characterised in that** at least two material strips (2a, 2b, 2c) of different mixtures are wound over the partial tyre (5), so that, in the finished tyre, the surface which comes into contact with the roadway has alternating regions which are formed by the respective individual mixtures of the material strips (2a, 2b, 2c).

4. Method of producing a pneumatic vehicle tyre according to at least one of the preceding claims, **characterised in that**, in the finished tyre, at least the two radially outer shoulder regions of the tread strip (7) are formed from a respective material strip (2a) of a winter mixture.

5. Method of producing a pneumatic vehicle tyre according to claim 4, **characterised in that**, in the finished tyre, at least the radially outer zone of the tread strip (7) is formed from a material strip (2a) of a winter mixture.

6. Method of producing a pneumatic vehicle tyre according to at least one of the preceding claims, **characterised in that** the material strip (2a), which forms at least partially the surface of the tread strip (7) coming into contact with the roadway, is formed from a mixture filled with silica.

7. Method of producing a pneumatic vehicle tyre according to at least one of the preceding claims, wherein the tread strip (7) is formed from at least two material strips (2a, 2b, 2c), which have a different electrical conductance, **characterised in that**, in the finished tyre, at least the regions of the surface of the tread strip (7), which come into contact with the roadway, and in which regions fine incisions (10) or grooves are introduced during the vulcanisation process, are formed from a material strip (2c) which, in the vulcanised state, has a higher electrical conductance, and **in that** the mixture of this material strip (2c) is brought into contact with another mixture, which also has a high electrical conductance, during the formation of the profile incisions.

8. Method of producing a pneumatic vehicle tyre according to claim 7, **characterised in that** a thin material strip (2c), formed from a mixture which has a high electrical conductance in the vulcanised state, is wound-on.

9. Method of producing a pneumatic vehicle tyre according to at least one of the preceding claims, **characterised in that** the partial tyre (5) is unvulcanised or is substantially vulcanised completely.

## Revendications

1. Procédé de fabrication d'un pneumatique de véhicule, procédé dans lequel, pour produire et appliquer une bande de roulement (7), de préférence non vulcanisée, sur un pneumatique partiel (5) qui présente déjà une carcasse bombée ainsi qu'un paquet de ceinture s'étendant, à partir de cette carcasse, extérieurement dans le sens radial, au moins deux bandes de matériau (2a, 2b, 2c) se composant à chaque fois d'un mélange de caoutchouc et/ou de matière plastique sont appliquées sur le pneumatique partiel (5), où au moins une bande de matériau (2a, 2b, 2c) est enroulée dans de nombreux enroulements s'étendant dans la direction circonférentielle du pneumatique, en étant pratiquement contigus les uns aux autres, où, lorsqu'il y a deux bandes de matériau (2a, 2b), celles-ci se composent de mélanges différents et, en fonction des qualités souhaitées du pneumatique, sont disposées en même temps ou successivement sur différentes zones, à l'intérieur ou dans la zone extérieure, dans le sens radial, de l'espace occupé par la bande de roulement finie (7),
**caractérisé en ce que** la partie de la bande de roulement (7) se trouvant à l'intérieur, dans le sens radial, que l'on appelle la base, et les parties qui forment la surface de la bande de roulement (7) venant en contact avec la chaussée, sont constituées d'une bande de matériau (2b) se composant d'un mélange - rempli de noir de carbone - pour la partie formant la base, et **en ce que** les zones qui restent, entre la base et la surface venant en contact avec la chaussée, sont remplies par l'enroulement d'une seconde bande de matériau (2a) d'un mélange du sommet ou par insertion d'une bande unique épaisse.

2. Procédé selon la revendication 1, **caractérisé en ce que** la seconde bande de matériau (2a) est appliquée pratiquement en même temps que la première bande de matériau (2b).

3. Procédé de fabrication d'un pneumatique de véhicule selon au moins l'une des revendications précédentes, **caractérisé en ce qu'**au moins deux bandes de matériau (2a, 2b, 2c) de mélanges différents sont enroulées sur le pneumatique partiel (5) de manière telle que, dans le pneumatique fini, la surface venant en contact avec la chaussée présente des zones alternées qui sont formées à chaque fois par les différents mélanges des bandes de matériau (2a, 2b, 2c).

4. Procédé de fabrication d'un pneumatique de véhicule selon au moins l'une des revendications précédentes, **caractérisé en ce que**, dans le pneumatique fini, au moins les deux zones d'épaulement extérieures - dans le sens radial - de la bande de roulement (7) sont formées à chaque fois par une bande de matériau (2a) d'un mélange hiver.

5. Procédé de fabrication d'un pneumatique de véhicule selon la revendication 4, **caractérisé en ce que**, dans le pneumatique fini, au moins la zone extérieure - dans le sens radial - de la bande de roulement (7) est constituée d'une bande de matériau (2a) d'un mélange hiver.

6. Procédé de fabrication d'un pneumatique de véhicule selon au moins l'une des revendications précédentes, **caractérisé en ce que** la bande de matériau (2a), qui constitue au moins partiellement la surface de la bande de roulement (7) venant en contact avec la chaussée, se compose d'un mélange rempli d'acide silique.

7. Procédé de fabrication d'un pneumatique de véhicule selon au moins l'une des revendications précédentes, dans lequel la bande de roulement (7) est formée par au moins deux bandes de matériau (2a, 2b, 2c) qui présentent une conductivité électrique différente, **caractérisé en ce que**, dans le pneumatique fini, au moins les zones de la surface de la bande de roulement (7), venant en contact avec la chaussée, dans lesquelles sont introduites, pendant la vulcanisation, de fines entailles (10) ou des rainures, sont constituées d'une bande de matériau (2c) qui présente, à l'état vulcanisé, une conductivité électrique supérieure, et **en ce que** le mélange de cette bande de matériau (2c), lors de la formation des entailles de sculpture, est mis en contact avec un autre mélange qui a également une conductivité électrique élevée.

8. Procédé de fabrication d'une pneumatique de véhicule selon la revendication 7, **caractérisé en ce qu'**une mince bande de matériau (2c) d'un mélange est enroulée, lequel mélange, à l'état vulcanisé, présente une conductivité électrique élevée.

9. Procédé de fabrication d'un pneumatique de véhicule selon au moins l'une des revendications précédentes, **caractérisé en ce que** le pneumatique partiel (5) est non vulcanisé ou pratiquement complètement vulcanisé.
